# DEMANDE DE BREVET EUROPEEN

(11) **EP 1 255 116 A1**
(43) Date de publication de la demande: **06.11.2002**
(21) Numéro de dépôt: 02291042.6
(22) Date de dépôt: 24.04.2002
(51) Int. Cl.: G01P 3/44

(54) **Ensemble comprenant un roulement instrumenté et un logement associés par un capteur monobloc**

(30) Priorité: 04.05.2001 FR 0106021
(71) Demandeur: S.N.R. ROULEMENTS, 74010 Annecy Cédex (FR)
(72) Inventeur: Beauprez, Jean-Michel, 74270 Menthonney-Sous-Clermont (FR)
(74) Mandataire: Geismar, Thierry

(57) **Abrégé**

Ensemble comprenant un roulement (1) équipé d'un dispositif capteur d'informations et un logement (2) à l'intérieur duquel ledit roulement est emmanché, dans lequel :
- ledit dispositif capteur d'informations comprend un codeur (11) et un capteur (12) muni d'au moins deux éléments sensibles (13) aptes à détecter ces impulsions ;
- ledit logement (2) est agencé pour permettre un blocage radial dudit roulement (1) ;
- ledit logement (2) présente des premiers moyens de blocage axial (15) du roulement (1) dans un sens ;
dans lequel le capteur (12) est réalisé de façon monobloc avec des deuxièmes moyens de blocage (19) du roulement (1), lesdits deuxièmes moyens (19) étant agencés pour coopérer avec des moyens complémentaires (22) prévus sur le logement (2) de sorte à assurer le blocage du roulement (1) au moins dans l'autre sens.

## Description

L'invention concerne un ensemble comprenant un roulement équipé d'un dispositif capteur d'informations et un logement à l'intérieur duquel ledit roulement est emmanché.

De tels ensembles permettent d'une part la mise en rotation d'un organe tournant en l'associant à la bague tournante et d'autre part le blocage en position du roulement et de l'organe par rapport au logement.

L'invention concerne également un système de direction de véhicule automobile comprenant une colonne de direction emmanchée dans la bague intérieure d'un tel ensemble et un tube de direction dans lequel le logement est formé pour recevoir en rotation ladite colonne.

Dans de tels ensembles, lorsque le roulement est équipé d'un dispositif capteur de vitesse de rotation, de positon angulaire et/ou de sens de rotation de la bague tournante par rapport à la bague fixe, les informations peuvent être converties en signaux fonction du couple exercé sur la colonne par l'intermédiaire du volant, lesdits signaux étant utilisés par un calculateur d'assistance de direction.

Dans un autre exemple d'application, de tels ensembles sont utilisés pour les roues de véhicules automobiles qui sont pourvues de système anti-blocage desdites roues, et les informations sont alors notamment utilisées par un calculateur d'assistance au freinage.

On connaît déjà des roulements équipés d'un dispositif capteur d'informations qui comprend un codeur générateur d'impulsions magnétiques associé à la bague tournante et, associé à la bague fixe, un capteur muni d'au moins deux éléments sensibles aptes à détecter ces impulsions.

Par ailleurs, on connaît du document US-5 927 867 un dispositif de fixation comprenant une douille pourvue de saillies, ladite douille étant emmanchée sur la bague extérieure du roulement avec les saillies disposées à l'intérieur d'une rainure prévue dans le logement. Dans un mode de réalisation, la douille porte le capteur.

Cette réalisation présente de nombreux inconvénients.

En particulier, elle nécessite la réalisation d'une douille particulière pour chaque type de capteur, ou inversement.

En outre, la réalisation du dispositif en deux pièces distinctes complique son montage ce qui n'est pas souhaitable notamment du fait des cadences en vigueur dans l'industrie automobile.

De plus, cette réalisation ne permet pas d'assurer une fixation suffisamment sûre du roulement à l'intérieur du logement. En effet, la fixation est assurée seulement par une portée d'encastrement sur laquelle tous les efforts subis par le roulement s'appliquent.

Enfin, le capteur étant associé à la douille qui est susceptible de bouger notamment en rotation sous l'effet des efforts subis, cette réalisation n'assure pas un positionnement précis du capteur par rapport au codeur.

Et, notamment pour des utilisations de sécurité telles que l'anti-blocage des roues ou l'assistance à la direction, le capteur doit être solidarisé au roulement de façon précise et sûre afin que les éléments sensibles soient toujours en regard et à distance d'entrefer du codeur.

L'invention vise donc notamment à remédier à ces inconvénients en proposant un ensemble dans lequel le capteur est réalisé de façon monobloc avec des moyens de blocage du roulement à l'intérieur du logement, lesdits moyens assurant un blocage sûr du roulement avec les éléments sensibles du capteur disposés de façon précise et sûre en regard et à distance d'entrefer du codeur.

A cet effet et selon un premier aspect, l'invention propose un ensemble comprenant un roulement équipé d'un dispositif capteur d'informations et un logement à l'intérieur duquel ledit roulement est emmanché, dans lequel :
- ledit roulement comprend une bague intérieure tournante destinée à être associée à un organe tournant, une bague extérieure fixe emmanchée dans le logement et des corps roulants disposés entre elles ;
- ledit dispositif capteur d'informations comprend un codeur générateur d'impulsions magnétiques associé à la bague tournante et, associé à la bague fixe, un capteur muni d'au moins deux éléments sensibles aptes à détecter ces impulsions ;
- ledit logement est agencé pour permettre un blocage radial dudit roulement ;
- ledit logement présente des premiers moyens de blocage axial du roulement dans un sens ;
dans lequel le capteur est réalisé de façon monobloc avec des deuxièmes moyens de blocage du roulement, lesdits deuxièmes moyens étant agencés pour coopérer avec des moyens complémentaires prévus sur le logement de sorte à assurer le blocage du roulement au moins dans l'autre sens.

Selon un deuxième aspect, l'invention propose un système de direction de véhicule automobile comprenant une colonne de direction emmanchée dans la bague intérieure d'un tel ensemble et un tube de direction recevant ladite colonne en rotation, dans lequel le logement est formé dans le tube.

D'autres objets et avantages de l'invention apparaîtront au cours de la description qui suit, faite en référence aux dessins annexés, dans lesquels :
- la figure 1 représente, en coupe longitudinale, un premier mode de réalisation d'un ensemble selon l'invention ;
- la figure 2 représente, en coupe longitudinale, un deuxième mode de réalisation d'un ensemble selon l'invention.
- la figure 3 représente une vue avant en coupe partielle suivant III de l'ensemble représenté sur la figure 2 ;

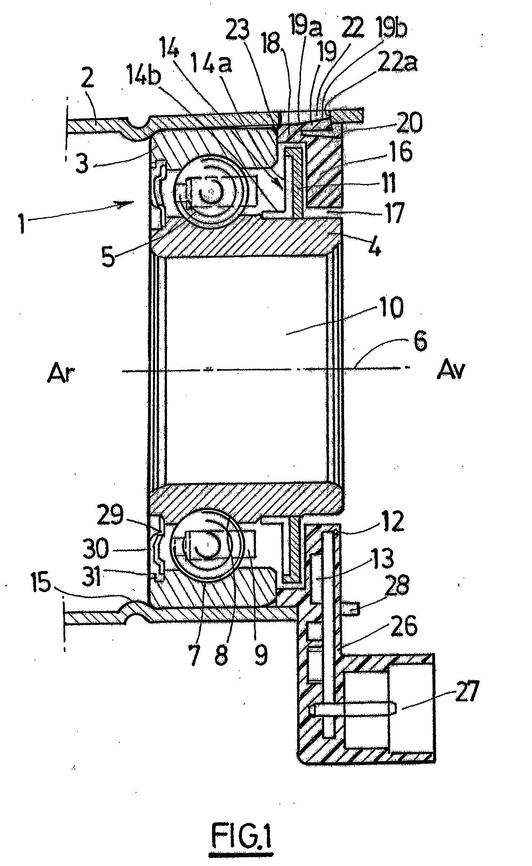

Sur les figures 1 à 3 est représenté un ensemble comprenant un roulement 1 équipé d'un dispositif capteur d'informations et un logement 2 à l'intérieur duquel ledit roulement 1 est associé par emmanchement.

Le roulement comprend une bague extérieure fixe 3 emmanchée dans le logement 2, une bague intérieure tournante 4 et des corps roulants 5 disposés entre elles afin de permettre la rotation relative de ces deux bagues autour d'un axe 6.

Par emmanchement, on entend que le roulement 1 est disposé à force dans le logement 2 avec la face supérieure de la bague fixe 3 associée à la face intérieure du logement 2.

Dans la description, les termes « extérieur » et « intérieur » sont définis par rapport à un plan respectivement opposé et en regard de l'axe 6, les termes « axial » ou « transversal » sont définis par rapport à un plan parallèle à l'axe 6, les termes « radial » ou « latéral » sont définis par rapport à un plan perpendiculaire à l'axe 6, les termes « avant » et « arrière » sont définis par rapport aux indices av et ar placés sur les figures, les dimensions mesurées selon l'axe 6 ou perpendiculairement à lui sont dites respectivement « axiales » et « radiales ».

Dans les modes de réalisation représentés, un chemin de roulement 7, 8 est réalisé respectivement sur la face intérieure de la bague fixe 3 et sur la face extérieure de la bague tournante 4, et le roulement est assuré par une rangée de billes 5 qui sont maintenues à équidistance par une cage 9.

De tels roulements 1 sont par exemple utilisés pour assurer la rotation d'une colonne de direction ou celle des roues d'un véhicule automobile. A cet effet, la bague intérieure 4 présente un alésage 10 destiné à loger la colonne de direction ou le moyeu de la roue.

Lorsque l'on veut connaître la vitesse de rotation, le sens de déplacement et/ou la position angulaire de la bague tournante 4 par rapport à la bague fixe 3, il est connu d'utiliser un dispositif capteur d'informations comprenant un codeur 11 générateur d'impulsions magnétiques associé à la bague tournante 4 et, associé à la bague fixe 3, un capteur 12 muni d'au moins deux éléments sensibles 13 aptes à détecter ces impulsions.

Ce type d'informations, après traitement électronique tel que par exemple celui décrit dans le document FR-2 792 380, est classiquement utilisé dans des systèmes d'aide à la conduite tels que l'assistance de direction ou des systèmes d'anti-blocage des roues.

Dans un exemple particulier, le codeur 11 est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.

Dans les modes de réalisation représentés, le codeur 11 est surmoulé sur une portée cylindrique annulaire et radiale 14a d'une armature 14. L'armature 14 comprend également une portée cylindrique annulaire et axiale 14b qui est associée, par exemple par emmanchement, sur la face extérieure de la bague intérieure 4. Cette réalisation permet la mise en rotation conjointe du codeur 11 et de la bague intérieure 4.

Dans les modes de réalisation représentés, le logement 2 est cylindrique avec un diamètre intérieur sensiblement égal au diamètre extérieur de la bague extérieure 3 afin de permettre l'emmanchement en assurant un blocage radial du roulement 1 à l'intérieur du logement 2.

Dans un exemple particulier, le logement 2 est formé dans un tube de direction de sorte à être intégré à lui, et le roulement 1 permet le blocage axial et radial ainsi que la mise en rotation d'une colonne de direction à l'intérieur de ce tube.

A cet effet, le logement 2 peut soit être formé d'un tronçon de tube soit être réalisée dans un tronçon de tube, par exemple par usinage ou déformation de celui-ci.

Le logement 2 présente des premiers moyens de blocage axial du roulement 1 dans un sens qui sont formés d'un épaulement 15 dont le diamètre intérieur est inférieur au diamètre extérieur de la bague extérieure 3.

Ainsi, lorsque le roulement 1 est introduit dans le logement 2 par l'avant, le roulement 1 vient en butée axiale sur l'épaulement 15 ce qui assure son blocage vers l'arrière.

Dans un exemple particulier, le capteur 12 comprend au moins deux éléments sensibles 13, par exemple une pluralité d'éléments sensibles alignés, qui sont choisis parmi les sondes à effet Hall, les magnétorésistances, les magnétorésistances géantes. De façon connue, de tels éléments sont aptes à détecter les impulsions magnétiques générées par le codeur 11 de sorte à fournir des signaux par exemple représentatifs de la vitesse de rotation, du sens de déplacement et/ou de la position angulaire de la bague tournante 4 par rapport à bague fixe 3.

Dans les modes de réalisation représentés sur les figures, le capteur 12 est formé d'un anneau 16 concentrique au roulement 1 et un alésage 17 est formé dans l'anneau 16 pour qu'il n'interfère pas avec la rotation de la bague tournante 4. L'anneau 16 comprend également une extension périphérique 18 s'étendant axialement vers l'avant.

Le capteur 12 est réalisé de façon monobloc, par exemple par moulage d'un matériau plastique, avec les éléments sensibles 13 disposés dans la masse de l'anneau 16.

Le capteur 12 comprend en outre, intégrés, des deuxièmes moyens de blocage du roulement 1, lesdits deuxièmes moyens étant agencés pour coopérer avec des moyens complémentaires prévus sur le logement 2 de sorte à assurer le blocage du roulement 1 au moins vers l'arrière.

Dans les modes de réalisation représentés, les deuxièmes moyens de blocage comprennent une pluralité de languettes élastiques 19 qui sont régulièrement disposées sur la face transversale extérieure du capteur 12. Les languettes 19 sont formées de sorte à être associées au capteur 12 par leur bord arrière 19a avec leur extrémité avant 19b saillant radialement vers l'extérieur de la surface dudit capteur 12.

Les languettes 19 sont aptes à se rabattre sensiblement dans le plan du capteur 12 afin de permettre l'emmanchement du roulement 1 dans le logement 2, puis à se redéployer radialement du fait de l'élasticité du matériau formant le capteur 12.

Dans le premier mode de réalisation, les languettes 19 sont prévues pour continuer axialement vers l'arrière l'extension 18 en dépassant radialement de la surface extérieure transversale de ladite extension 18. Pour permettre le rabattement des languettes 19, un biseautage 20 est prévu sur la face transversale extérieure de l'anneau 16, au moins en regard des languettes 19.

Dans le deuxième mode de réalisation, les languettes 19 sont identiques à celles du premier mode de réalisation mais un logement biseauté 21 est prévu respectivement en regard des languettes 19 pour permettre leur rabattement lors de l'introduction du roulement 1 dans le logement 2.

Dans les modes de réalisation représentés, les moyens complémentaires sont formés d'évidements 22 agencés pour recevoir respectivement lesdites languettes 19 déployées radialement, lesdits évidements 22 étant régulièrement répartis sur le logement 2. Ainsi, le blocage axial entre l'extrémité avant 19b d'une languette 19 et la face latérale arrière 22a d'un évidement 22 permet de bloquer vers l'avant le roulement 1 à l'intérieur du logement 2.

Lors de l'introduction du roulement 1 dans le logement 2, les languettes 19 viennent en contact avec la face intérieure du logement 2 ce qui provoque leur rabattement radial et permet ainsi l'emmanchement, puis, lorsque les languettes 19 sont en regard des évidements 22, elles se déploient pour permettre le blocage axial du roulement 1.

A cet effet, la distance entre l'épaulement 15 et les évidements 22 est agencée pour bloquer axialement le roulement 1 et le capteur 12 sans jeu, avec les éléments 13 sensiblement en regard et à distance d'entrefer du codeur 12.

En outre, les largeurs respectives des languettes 19 et des évidements 22 peuvent être sensiblement égales de sorte à assurer un blocage en rotation du roulement 1 à l'intérieur du logement 2.

Dans un mode de réalisation non représenté, les moyens complémentaires sont formés d'une rainure annulaire formée sur la face intérieure du logement de sorte à recevoir les languettes 19 déployées radialement en permettant un blocage axial entre l'extrémité avant des languettes et la face latérale arrière de la rainure.

Suivant ces deux réalisations, l'emmanchement du roulement 1 à l'intérieur du logement 2 est réalisé de façon quasi irréversible puisqu'il interdit tout retour en arrière du roulement 1.

Dans le premier mode de réalisation (figure 1), la longueur de l'extension 17 est agencée pour, en venant en appui sur la face latérale avant 23 de la bague fixe 3, permettre le positionnement des éléments sensibles 13 en regard et à distance d'entrefer du codeur 11.

A cet effet, la face latérale avant 23 ne comporte aucun usinage spécifique pour permettre le maintien ou la mise en position du capteur 12 avec les éléments sensibles 13 à distance d'entrefer du codeur 11.

Dans cette réalisation, le blocage axial du roulement 1 et du capteur 12 vers l'arrière est assuré entre la face latérale avant 23 et la face latérale arrière de l'extension 17. Ainsi, le capteur 12 forme butée axiale pour le roulement 1.

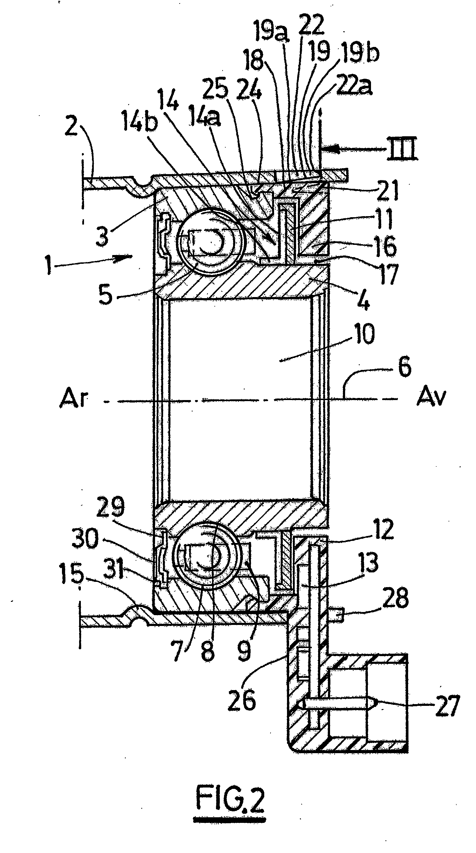

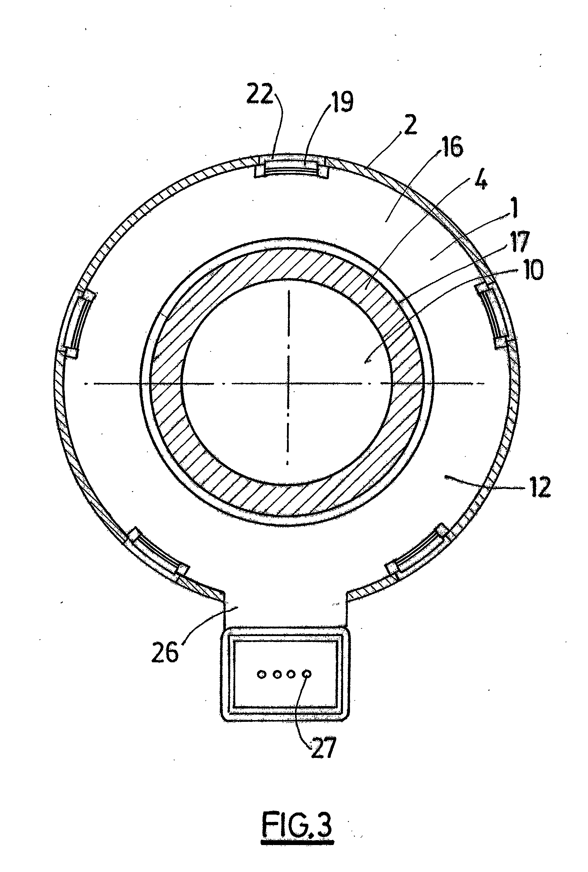

Dans le deuxième mode de réalisation (figures 2 et 3), le capteur 12 et la bague extérieure 3 comprennent des moyens d'association réciproque.

Les moyens d'association comprennent des doigts 24 s'étendant axialement vers l'arrière de l'extension 18 et une gorge 25 agencée sur la face transversale extérieure de la bague fixe 3 pour recevoir lesdits doigts 24 en disposant les éléments sensibles 13 en regard et à distance d'entrefer du codeur 11.

Ainsi, préalablement à l'introduction du roulement 1 dans le logement 2, le capteur 12 est associé à la bague fixe 3, puis l'ensemble est introduit dans le logement 2 pour être bloqué.

Suivant cette réalisation, l'effort de blocage est transmis entre le capteur 12 et la bague extérieure 3 par l'intermédiaire des moyens d'association, le capteur 12 formant également butée axiale pour le roulement 1.

Dans les modes de réalisation représentés, le capteur 12 comprend un logement radial 26 agencé pour recevoir la connectique d'entrée/sortie 27 du capteur 12, par exemple formée d'un connecteur ou d'un câble multifilaire.

Le logement 2 comprend alors une découpe axiale 28 dont la taille est agencée pour recevoir le logement radial 26 en assurant un blocage en rotation du roulement 1 à l'intérieur du logement 1.

En outre, cette réalisation permet d'indexer l'introduction du roulement 1 à l'intérieur du logement 2 en disposant les languettes 19 en regard des évidements 22.

L'ensemble selon l'invention permet donc, de façon sûre et sans pièce supplémentaire, d'une part d'assurer un blocage axial, radial et en rotation du roulement 1 à l'intérieur du logement 2 et d'autre part d'assurer l'association du capteur 12 sur le roulement 1 avec les éléments sensibles 13 en regard et à distance d'entrefer du codeur 11.

En effet, d'une part l'effort de blocage appliqué est seulement limité par la résistance du matériau du capteur 12 puisque celui-ci forme butée mécanique au roulement 1, et d'autre part tout mouvement relatif du capteur 12 par rapport à la bague extérieure 3 et donc par rapport au codeur 11 est empêché.

Dans les modes de réalisation représentés sur les figures, l'étanchéité du roulement 1 est assurée, sur la face arrière, par une lèvre en élastomère 29 qui frotte sur la bague intérieure 4. Pour ce faire, la lèvre 29 est surmoulée sur une armature 30 associée, par exemple par clipsage, dans une rainure 31 prévue sur la face intérieure de la bague extérieure 3.

L'étanchéité sur la face avant est réalisée grâce à la disposition relative de l'armature 14 et de l'anneau 16. En effet, ceux-ci forment une chicane qui permet d'éviter la pollution du roulement et les fuites de lubrifiant. En particulier, le capteur 12 permet de protéger le codeur 11 en lui faisant face sur l'ensemble de sa périphérie afin de limiter la progression des polluants.

Toutefois, on peut prévoir d'autres moyens d'étanchéité, par exemple que les cages comprennent des extensions axiales frottant sur les bagues afin de servir de déflecteurs ou, notamment pour des roulements pour mouvements alternatifs, d'utiliser un lubrifiant solide tel que décrit dans le document FR-2 760 055.

En outre, et pour améliorer l'étanchéité côté avant, une lèvre d'étanchéité telle que décrite ci-dessus peut être utilisée pour venir frotter sur la portée de l'armature.

## Revendications

1. Ensemble comprenant un roulement (1) équipé d'un dispositif capteur d'informations et un logement (2) à l'intérieur duquel ledit roulement est emmanché, dans lequel :
- ledit roulement (1) comprend une bague intérieure tournante (4) destinée à être associée à un organe tournant, une bague extérieure fixe (3) emmanchée dans le logement (2) et des corps roulants (5) disposés entre elles ;
- ledit dispositif capteur d'informations comprend un codeur (11) générateur d'impulsions magnétiques associé à la bague tournante (4) et, associé à la bague fixe (3), un capteur (12) muni d'au moins deux éléments sensibles (13) aptes à détecter ces impulsions ;
- ledit logement (2) est agencé pour permettre un blocage radial dudit roulement (1) ;
- ledit logement (2) présente des premiers moyens de blocage axial (15) du roulement (1) dans un sens ;
ledit ensemble étant **caractérisé en ce que** le capteur (12) est réalisé de façon monobloc avec des deuxièmes moyens de blocage (19) du roulement (1), lesdits deuxièmes moyens (19) étant agencés pour coopérer avec des moyens complémentaires (22) prévus sur le logement (2) de sorte à assurer le blocage du roulement (1) au moins dans l'autre sens.

2. Ensemble selon la revendication 1, **caractérisé en ce que** les deuxièmes moyens de blocage comprennent une pluralité de languettes élastiques (19) qui sont formées sur la face transversale extérieure du capteur (12), lesdites languettes (19) ayant leur extrémité avant (19b) saillant radialement vers l'extérieur de ladite face du capteur (12) et étant aptes à se rabattre sensiblement dans le plan de ladite face (12) afin de permettre l'emmanchement du roulement (1) dans le logement (2), puis à se redéployer radialement du fait de l'élasticité du matériau formant le capteur (12).

3. Ensemble selon la revendication 2, **caractérisé en ce que** les moyens complémentaires sont formés d'évidements (22) agencés pour recevoir respectivement lesdites languettes (19) déployées radialement, de sorte à permettre un blocage axial entre l'extrémité avant (19b) d'une languette (19) et la face latérale arrière (22a) d'un évidemment (22).

4. Ensemble selon la revendication 3, **caractérisé en ce que** les largeurs respectives des languettes (19) et des évidements (22) sont sensiblement égales de sorte à assurer un blocage en rotation du roulement (1) à l'intérieur du logement (2).

5. Ensemble selon la revendication 2, **caractérisé en ce que** les moyens complémentaires sont formés d'une rainure annulaire formée sur la surface intérieure du logement (2) de sorte à recevoir lesdites languettes (19) déployées radialement en permettant un blocage axial entre l'extrémité avant des languettes et la face latérale arrière de la rainure.

6. Ensemble selon l'une quelconque des revendications 1 à 5, **caractérisé en ce que** le capteur (12) et la bague extérieure (3) comprennent des moyens d'association réciproque.

7. Ensemble selon la revendication 6, **caractérisé en ce que** le capteur (12) comprend un anneau (16) concentrique au roulement (1) dans lequel les éléments sensibles (13) sont disposés et une extension périphérique (17) qui s'étend axialement vers l'arrière, les moyens d'association comprenant au moins deux doigts (24) s'étendant axialement vers l'arrière de l'extension (17) et une gorge (25) agencée sur la face transversale extérieure de la bague fixe (3) pour recevoir lesdits doigts (24) en disposant les éléments sensibles (13) en regard et à distance d'entrefer du codeur (11).

8. Ensemble selon l'une quelconque des revendications 1 à 7, **caractérisé en ce que** le capteur (12) comprend un logement radial (26) pour la connectique d'entrée/sortie (27) dudit capteur (12).

9. Ensemble selon la revendication 8, **caractérisé en ce que** le logement (2) comprend une découpe axiale (28) dont la taille est agencée pour recevoir le logement radial (27) en assurant un blocage en rotation du roulement (1) à l'intérieur du logement (2).

10. Ensemble selon l'une quelconque des revendications 1 à 9, **caractérisé en ce que** les éléments sensibles (23) sont choisis parmi les sondes à effet Hall, les magnétorésistances, les magnétorésistances géantes.

11. Ensemble selon l'une quelconque des revendications 1 à 10, **caractérisé en ce que** le codeur (11) est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.

12. Système de direction de véhicule automobile comprenant une colonne de direction emmanchée dans la bague intérieure (4) d'un ensemble selon l'une quelconque des revendications 1 à 11 et un tube de direction recevant ladite colonne en rotation, ledit système étant **caractérisé en ce que** le logement (2) est formé dans le tube.
